# EUROPÄISCHE PATENTSCHRIFT

(11) **EP 0 578 069 B1**
(45) Veröffentlichungstag und Bekanntmachung des Hinweises auf die Patenterteilung: **09.10.1996**
(21) Anmeldenummer: 93110133.1
(22) Anmeldetag: 24.06.1993
(51) Int. Cl.: B66B 11/04, F16H 1/22

(54) **Antriebseinheit für ein Hebezeug, insbesondere für einen Personen- oder Lastenaufzug**
Driving equipment for a hoist, in particular for a goods or passenger elevator
Dispositif d'entrainement pour une machine de levage, en particulier pour un ascenseur de matériaux ou de personnes

(30) Priorität: 26.06.1992 DE 4221005; 30.06.1992 DE 4221399
(43) Veröffentlichungstag der Anmeldung: 12.01.1994
(73) Patentinhaber: WITTUR AUFZUGTEILE GmbH & Co., W-85259 Wiedenzhausen (DE)
(72) Erfinder: Wittur, Horst, D-8047 Karlsfeld (DE)
(74) Vertreter: Grosse, Wolfgang, Dipl.-Ing.

(56) Entgegenhaltungen:
- EP-A- 0 416 949
- WO-A-89/11436
- DE-A- 3 840 281
- NL-C- 26 697

## Beschreibung

Die Erfindung betrifft eine Antriebseinheit für ein Hebezeug entsprechend dem Oberbegriff des Patentanspruch 1.

Bei derartigen Antriebseinheiten haben sich in letzter Zeit gegenüber den früher fast ausschließlich gebräuchlichen Schneckengetrieben Stirnradgetriebe, insbesondere Planetengetriebe bewährt, weil sie einen besseren Wirkungsgrad aufweisen und ein besseres Fahrverhalten, vor allem beim Anfahren und Abbremsen ermöglichen.

Eine aus der WO 89/11436 A1 bekannte gattungsgemäße Antriebseinheit ist dreiteilig mit Motor, Bremse und Planetengetriebe aufgebaut. Dabei bildet das Bremsgehäuse die Tragkonstruktion, an die einerseits der Motor, andererseits das Planetengetriebe angeflanscht ist. Wegen des in Achsrichtung durchlaufenden Antriebsstranges mit den hintereinandergeschalteten Bauelementen weist diese Einheit eine verhältnismäßig große Baulänge auf, für die die Abmessungen eines Aufzugschachtes nicht immer ausreichen. Über das freitragend an das Bremsgehäuse angeflanschte Planetengetriebe und die dort angreifenden Lasten von Fahrkorb und Gegengewicht muß ferner ein erhebliches Kippmoment von dem Bremsgehäuse aufgenommen werden, so daß besondere Maßnahmen im Hinblick auf die Verankerung in der Gebäudeunterkonstruktion vorgesehen werden müssen. Durch die Positionierung der Bremse an der Motorseite ist die Verzahnung des Getriebes Stoßlasten besonders bei der Be-und Entladung des Fahrkorbes ausgesetzt, so daß man mit vorzeitigem Verschleiß rechnen muß.

Der Erfindung liegt die Aufgabe zugrunde, eine Antriebseinheit anzugeben, die eine Verkürzung der Baulänge zuläßt, eine gleichmäßige Einleitung der Lasten in das Gebäude gewährleistet und welche die Verzahnung des Getriebes im Stillstand entlastet, so daß der technische Gesamtaufwand der Gesamtanlage verringert und die Lebensdauer erhöht werden.

Zur Lösung der Aufgabe ist entsprechend dem kennzeichnenden Teil des Patentanspruchs 1 vorgesehen, daß das Planetengetriebe beidseitig der Seilscheibe an der Tragkonstruktion abgestützt ist und daß der Abtriebsteil des Planetengetriebes mittelbar oder unmittelbar als der gebremste Teil der Bremsvorrichtung ausgebildet ist.

Dadurch ergibt sich eine gleichmäßige Lastaufnahme und -ableitung in das Gebäude. Der Antriebsmotor ist dabei dem Planetengetriebe gegenüberliegend an der Tragkonstruktion befestigt, wobei durch den Wegfall des Bremsgehäuses die Baulänge wesentlich verkürzt ist.

Die Bremse kann dabei in geeigneter Weise auf das Getriebe oder die Seilscheibe einwirken.

Weitere vorteilhafte Ausgestaltungen ergeben sich aus den Unteransprüchen.

Durch die zusätzliche Abstützung des Getriebes am Gehäusemantel ist es möglich, die Baulänge des Getriebes zu verkürzen, indem eines der Lastaufnahmelager entfallen kann.

Die Tragkonstruktion kann als U-förmiger Rahmen oder auch als geteiltes Gehäuse ausgebildet sein, welches das Planetengetriebe wenigstens teilweise umschließt. Dadurch wird die Anbringung verschiedener Bremssysteme erleichtert.

Weitere Merkmale, Vorteile und Einzelheiten der Erfindung ergeben sich aus der nachfolgenden Beschreibung von bevorzugten Ausführungsbeisielen anhand der Zeichnung. In der Zeichnung zeigen:
- Fig. 1: einen Längsschnitt durch eine erfindungsgemäße Antriebseinheit mit einem U-förmigen Tragrahmen;
- Fig. 2: eine Seitenansicht einer Antriebseinheit mit einem als geteiltes Gehäuse ausgebildeten Tragrahmen;
- Fig. 3: eine Teilschnittansicht mit verkürztem Getriebe;
- Fig. 4: eine Ansicht auf die stirnseitige Abstützung des Gehäusemantels;
- Fig. 5: eine auf den Gehäusemantel wirkende Scheibenbremseinrichtung;
- Fig. 6: eine auf den Gehäusemantel wirkende Trommelbremse;
- Fig. 7: eine am Außenumfang der Seilscheibe angreifende Bremsvorrichtung;
- Fig.8: eine als Scheibenbremse ausgebildete Bremseinrichtung, bei der der Steg der Seilscheibe als Bremsscheibe dient, und
- Fig.9: eine als Scheibenbremse ausgebildete Bremseinrichtung, bei der der Seilscheibenflansch als Bremsscheibe wirkt.

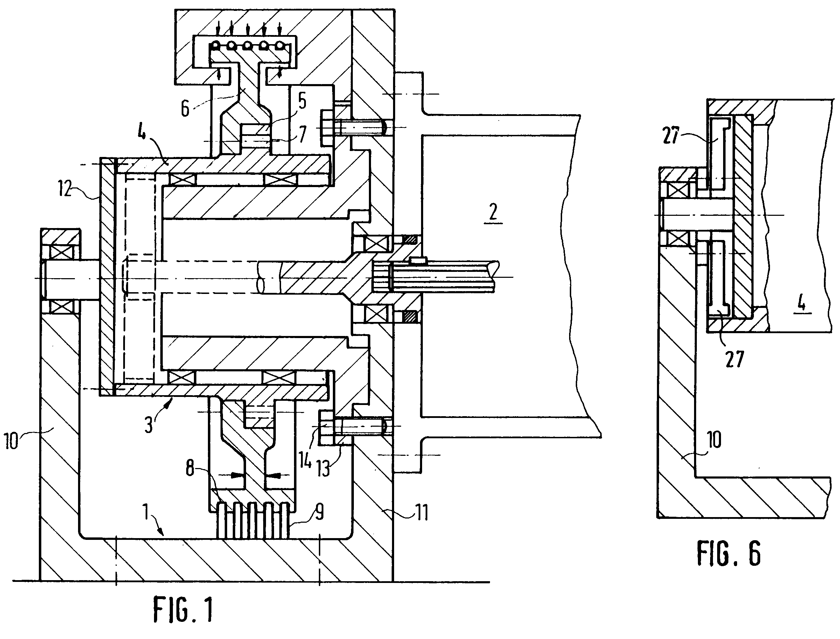

Die Fig. 1 bis 3 zeigen schematisch eine Antriebseinheit, die für einen Personenaufzug geeignet ist. Die wesentlichen Bauteile der Einheit sind die Tragkonstruktion 1, der Antriebsmotor 2 und das Planentengetriebe 3. Die Tragkonstruktion 1 ist in nicht dargestellter Weise im oder über dem Aufzugsschacht auf Trägern oder einem Fundament festgelegt, um die vom Fahrkorb und dem Gegengewicht erzeugten statischen und dynamischen Kräfte aufzunehmen und in das Gebäude abzuleiten. Das Prinzip und die Wirkungsweise des Planetengetriebes sind nicht Gegenstand der Erfindung und deshalb nicht näher erläutert.

Die Abtriebseite des Planetengetriebes 3 wird von dem Gehäusemantel 4 gebildet. An den Gehäusemantel ist ein Flansch 5 angeformt, mit dem die Seilscheibe 6 durch Schrauben 7 verbunden ist. Die Seilscheibe 6 ist an ihrem Außenumfang mit Rillen 8 versehen, in die die Seile 9 des Aufzugs eingelegt sind.

Die Tragkonstruktion 1 besteht in der Ausführung gemäß Fig. 1 aus einem U-förmigen Rahmen mit den Schenkeln 10 und 11. Zwischen diesen Schenkeln ist am Schenkel 10 die Stirnseite 12 des Gehäusemantels 4 drehbar gelagert. Am Schenkel 11 ist der feststehende Getriebeteil, Flansch 13, mit Schrauben 14 befestigt. Der Antriebsmotor 2 ist auf der Außenseite des Schenkels 11 koaxial zu dem Planetengetriebe angeflanscht und mit diesem über eine geeignete Wellenkupplung verbunden.

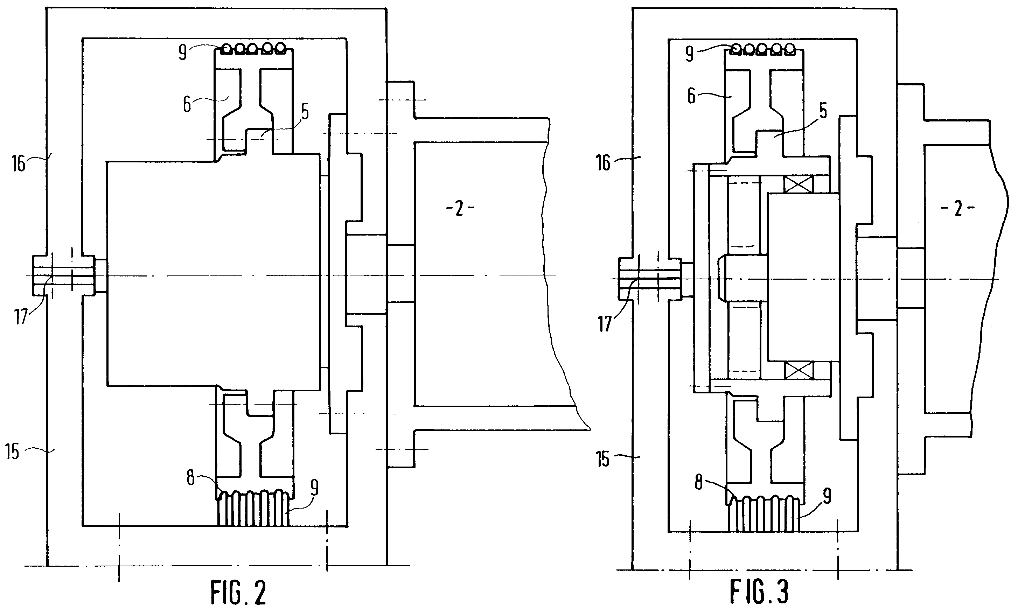

Gemäß den Fig. 2 und 3 wird der Tragrahmen von zwei Gehäuseteilen 15 und 16 gebildet, die an einer waagerechten Trennfuge 17 aneinanderstoßen. Die zur Zeichenebene parallelen Seiten sind zur Belüftung offen; sie können im Bedarfsfall aber auch geschlossen ausgebildet sein. Für den Durchgang der Seile sind Öffnungen vorgesehen. Gegenüber den Ausführungen nach den Fig. 1 und 2 besitzt das Getriebe nach Fig.3 nur ein internes Lastaufnahmelager. Dies ist möglich durch die Anordnung des Außenlagers in der Tragkonstruktion und führt zur Verkürzung der Baulänge des Planetengetriebes.

Die erfindungsgemäße Ausbildung des Tragrahmens ermöglicht die Anbringung eines oberen jochförmigen Gehäuseteils 16, so daß die Anbringung verschiedener Bremsvorrichtungen in unterschiedlichen Positionen erleichtert wird.

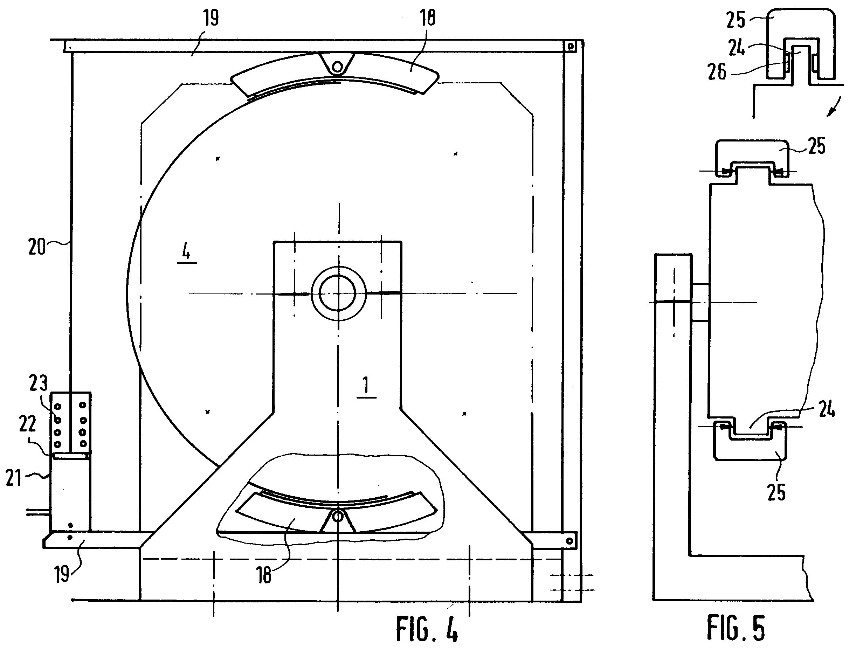

Die Fig. 4 bis 10 zeigen bevorzugte Ausgestaltungen von Bremsvorrichtungen.

Gemäß Fig. 4 ist der Gehäusemantel 4 als Außenbremstrommel ausgebildet, auf die zwei diametral gegenüberliegende Bremsbacken 18 einwirken. Die Bremsbacken 18 sind an Trägern 19 gelagert, die mit einem Ende an der Tragkonstruktion festgelegt sind und an den anderen Enden über ein Gestänge 20 und über eine Kolben-Zylinderanordnung 21 miteinander verbunden sind. Auf den Kolben 22 innerhalb des Zylinders wirkt eine Druckfeder 23, unter deren Wirkung die Bremsbacken 18 gegen den Gehäusemantel 4 gedrückt werden. Die Bremsbacken können sowohl axial als auch radial versetzt angeordnet werden.

Der Gehäusemantel 4 bildet zusätzlich zu seiner Funktion als abtriebsseitiger Teil des Planetengetriebes und Träger der Seilscheibe den gebremstren Teil der Bremsvorrichtung. Hierzu ist in der Ausführung gemäß Fig.5 an dem Gehäusemantel eine Bremsscheibe 24 angebracht oder angeformt, die an zwei diametral gegenüberliegenden Stellen von zwei Bremssätteln 25 übergriffen wird. In jedem Bremssattel 25 sind zwei Bremsklötze 26 gelagert, die sich unter Federkraft beidseitig an die Bremsscheibe anlegen und bei laufendem Antrieb unter der Einwirkung einer hydraulischen, elektrischen oder mechanischen Gegenkraft davon gelöst werden. Die Bremssättel 25 sind in geeigneter Weise ortsfest gelagert, z. B. an der Tragkonstruktion 1 befestigt.

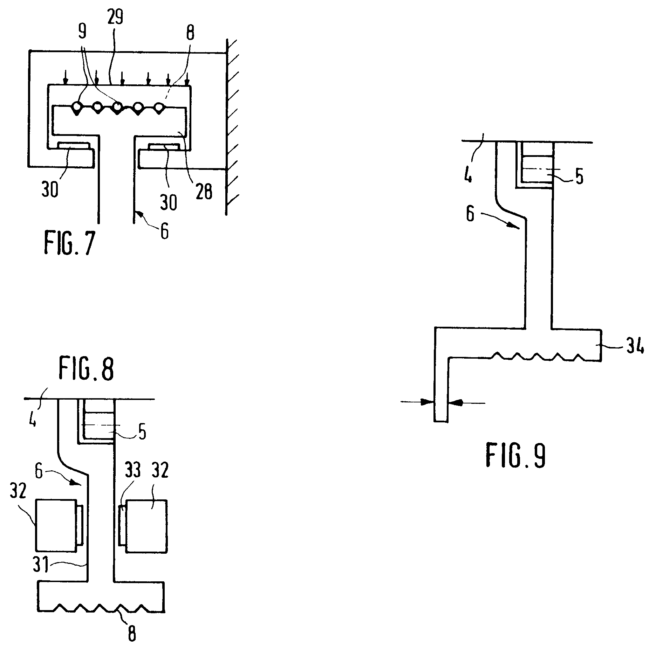

In der Ausführung nach Fig.6 ist der Gehäusemantel an seiner Strinseite als Trommel einer Innentrommelbremse ausgebildet. Die Bremsbacken sind mit 27 bezeichnet.

Bei dem Beispiel der Fig.7 greift die Bremse unmittelbar an der Seilscheibe 6 bzw. den Seilen 9 an. Die Seilscheibe ist an ihrem Außenumfang mit einem umlaufenden Seilscheibenflansch 28 versehen, in den die Rillen 8 zur Aufnahme der Seile 9 eingearbeitet sind. Die Bremsvorrichtung umgreift im oberen Bereich der Seilscheibe, in dem die Seile in den Rillen liegen, den Flansch zangenartig von oben und unten. Beim Bremsen legt sich die obere Bremsfläche 29 gegen die Oberseite der Seile 9, während die unteren Bremsklötze 30 von unten gegen den Flansch 28 zur Anlage kommen. Die von der Bremse ausgeübten Radialkräfte sind damit ausgeglichen, so daß nur die in Umfangsrichtung wirkende Bremskraft verbleibt, die von der Tragkonstruktion aufgenommen wird.

In dem Beispiel nach Fig.8 ist der Seilscheibensteg 31 der Seilscheibe 6 gleichzeitig als Bremsscheibe ausgebildet. Anstelle eines Sattels sind lokale Halterungen 32 für die Bremsklötze 33 vorgesehen.

Bei dem Beispiel nach Fig.9 ist der Flansch 34 der Treibscheibe 6 zur Bremsscheibe ausgebildet.

## Patentansprüche

1. Antriebseinheit für ein Hebezeug, insbesondere für einen Personen- oder Lastenaufzug, mit einer Tragkonstruktion (1), einem Antriebsmotor (2), einer Bremsvorrichtung und einem von dem Antriebsmotor angetriebenen Planetengetriebe (3), dessen Gehäuseteil (4) die Abtriebsstufe bildet und an seinem Umfang eine Seilscheibe (6) trägt, **dadurch gekennzeichnet,** daß das Planetengetriebe (3) beidseitig der Seilscheibe (6) an der Tragkonstruktion (1) abgestützt ist und daß der Abtriebsteil (4) des Planetengetriebes (3) mittelbar oder unmittelbar als der gebremste Teil der Bremsvorrichtung ausgebildet ist.

2. Antriebseinheit nach Anspruch 1, **dadurch gekennzeichnet,** daß das Planetengetriebe (3) an einer Seite stirnseitig und an der gegenüberliegenden Seite am Abtriebsteil (4) mittelbar oder unmittelbar abgestützt ist.

3. Antriebseinheit nach Anspruch 2, **dadurch gekennzeichnet,** daß das Abtriebsteil an seinem Umfang unmittelbar abgestützt ist.

4. Antriebseinheit nach Anspruch 2, **dadurch gekennzeichnet,** daß das Abtriebsteil über ein angeflanschtes Teil (12) mittelbar an seinem Umfang abgestützt ist.

5. Antriebseinheit nach Anspruch 1, **dadurch gekennzeichnet,** daß das Planetengetriebe (3) an seinen beiden Stirnseiten abgestützt ist.

6. Antriebseinheit nach Anspruch 1, **dadurch gekennzeichnet,** daß die beidseitigen Abstützungen eine Einheit bilden.

7. Antriebseinheit nach einem der Ansprüche 1 bis 6, **dadurch gekennzeichnet,** daß die Tragkonstruktion (1) als Rahmen ausgebildet ist, in dessen Innerem an zwei gegenüberliegenden Seiten das Planetengetriebe (3) abgestützt bzw. gelagert ist.

8. Antriebseinheit nach Anspruch 7, **dadurch gekennzeichnet,** daß der Tragrahmen einstückig und im wesentlichen U-förmig ausgebildet ist, wobei die U-Schenkel (10, 11) die gegenüberliegenden Seiten der Tragkonstruktion (1) bilden.

9. Antriebseinheit nach einem der vorhergehenden Ansprüche, **dadurch gekennzeichnet,** daß der Tragrahmen von wenigstens zwei, vorzugsweise in der Axialebene des Getriebes geteilten Gehäuseteilen (15, 16) gebildet ist, welche das Planetengetriebe (3) wenigstens teilweise umschließen.

10. Antriebseinheit nach Anspruch 1, **dadurch gekennzeichnet,** daß das Planetengetriebe (3) auf wenigstens einer Seite der Seilscheibe (6) an seinem Außenumfang an der Tragkonstruktion (1) abgestützt ist.

11. Antriebseinheit nach einem der vorhergehenden Ansprüche 1 bis 10, **dadurch gekennzeichnet,** daß der Antriebsmotor (2) an der Außenseite (11) des Tragrahmens (1) befestigt ist.

12. Antriebseinheit nach einem der vorhergehenden Ansprüche 1 bis 10, **dadurch gekennzeichnet,** daß der Tragrahmen als Teil des Motorlagerrahmens ausgebildet ist und der Motor unmittelbar an das Planetengetriebe angeflanscht ist.

13. Antriebseinheit nach einem der vorhergehenden Ansprüche, **dadurch gekennzeichnet,** daß die Seilscheibe (6) im wesentlichen in der Symmetrieebene zwischen den Abstützungen in der Tragkonstruktion (1) angeordnet ist.

14. Antriebseinheit nach einem der vorhergehenden Ansprüche, **dadurch gekennzeichnet,** daß die Bremsvorrichtung an dem Gehäusemantel (4) des Planetengetriebes (3) und/oder an der Seilscheibe vorgesehen ist.

15. Antriebseinheit nach Anspruch 14, **dadurch gekennzeichnet,** daß die Bremsvorrichtung wenigstens eine an der Außenseite des Gehäusemantels (4) und/oder der Seilscheibe vorgesehene Bremsscheibe (25) aufweist.

16. Antriebseinheit nach Anspruch 14, **dadurch gekennzeichnet,** daß der Gehäusemantel (4) eine Bremsfläche für eine Backenbremse und/oder Bandbremse aufweist.

17. Antriebseinheit nach Anspruch 16, **dadurch gekennzeichnet,** daß die Seilscheibe (6) mit einem in Umfangsrichtung verlaufenden, ringförmigen Flansch (28) versehen ist, in dessen Außenumfang die Nuten (8) zur Aufnahme der Seile (9) eingearbeitet sind, und daß die Bremsvorrichtung radial einerseits auf die nach außen gerichteten Seiten der Seile (9) und andererseits gegen die Innenseite des Flansches (28) wirkt.

18. Antriebseinheit nach Anspruch 14, **dadurch gekennzeichnet,** daß der Steg der Seilscheibe als Bremsfläche für eine Scheibenbremse ausgebildet ist.

19. Antriebseinheit nach Anspruch 14, **dadurch gekennzeichnet,** daß ein radial ausgerichteter Teil der Seilscheibe (6) als Bremsscheibe ausgebildet ist.

20. Antriebseinheit nach einem der vorhergehenden Ansprüche, **dadurch gekennzeichnet,** daß der Seilscheibenflansch als Bremsscheibe ausgeführt ist.

## Claims

1. A drive unit for a hoisting apparatus, in particular for a passenger or freight elevator, having a supporting structure (1), a drive motor (2), a brake apparatus and a planet gear (3) which is driven by the drive motor and whose housing portion (4) forms the driven stage and bears a pulley (6) on its periphery, **characterized** in that the planet gear (3) is supported on the supporting structure (1) on both sides of the pulley (6), and the driven portion (4) of the planet gear (3) is formed directly or indirectly as the braked portion of the brake apparatus.

2. The drive unit of claim 1, **characterized** in that the planet gear (3) is supported directly or indirectly on one side on the end face and on the opposite side on the driven portion (4).

3. The drive unit of claim 2, **characterized** in that the driven portion is supported directly on its periphery.

4. The drive unit of claim 2, **characterized** in that the driven portion is supported indirectly on its periphery via a flange-mounted member (12).

5. The drive unit of claim 1, **characterized** in that the planet gear (3) is supported on both of its end faces.

6. The drive unit of claim 1, **characterized** in that the support means on both sides form a unit.

7. The drive unit of any of claim 1 to 6, **characterized** in that the supporting structure (1) is formed as a frame within which the planet gear (3) is supported or mounted on two opposite sides.

8. The drive unit of claim 7, **characterized** in that the supporting frame is of integral and substantially U-shaped design, the legs (10,11) of the U forming the opposite sides of the supporting structure (1).

9. The drive unit of any of the above claims, **characterized** in that the supporting frame is formed by at least two housing portions (15, 16) preferably divided in the axial plane of the gearing and at least partly enclosing the planet gear (3).

10. The drive unit of claim 1, **characterized** in that the planet gear (3) is supported on its outer periphery on the supporting structure (1) on at least one side of the pulley (6).

11. The drive unit of any of the above claims 1 to 10, **characterized** in that the drive motor (2) is mounted on the outside (11) of the supporting frame (1).

12. The drive unit of any of the above claims 1 to 10, **characterized** in that the supporting frame is formed as part of the motor mount frame and the motor is flange-mounted directly on the planet gear.

13. The drive unit of any of the above claims, **characterized** in that the pulley (6) is disposed in the supporting structure (1) substantially in the plane of symmetry between the support means.

14. The drive unit of any of the above claims, **characterized** in that the brake apparatus is provided on the housing jacket (4) of the planet gear (3) and/or on the pulley.

15. The drive unit of claim 14, **characterized** in that the brake apparatus has at least one brake disk (25) provided on the outside of the housing jacket (4) and/or the pulley.

16. The drive unit of claim 14, **characterized** in that the housing jacket (4) has a braking area for a shoe brake and/or band brake.

17. The drive unit of claim 16, **characterized** in that the pulley (6) is provided with a circumferentially extending ring-shaped flange (28) with the grooves (8) for taking up the ropes (9) worked into its outer periphery, and the brake apparatus acts radially on the outwardly directed sides of the ropes (9), on the one hand, and against the inside of the flange (28), on the other hand.

18. The drive unit of claim 14, **characterized** in that the web of the pulley is formed as a braking area for a disk brake.

19. The drive unit of claim 14, **characterized** in that a radially aligned part of the pulley (6) is formed as a brake disk.

20. The drive unit of any of the above claims, **characterized** in that the pulley flange is designed as a brake disk.

## Revendications

1. Dispositif d'entraînement pour un appareil de levage, en particulier pour un monte-charge ou un ascenseur, avec une structure porteuse (1), un moteur d'entraînement (2), un dispositif de freinage et un engrenage planétaire (3) entraîné par le moteur d'entraînement, engrenage planétaire dont la partie de logement (4) forme l'étage de sortie et porte sur sa périphérie une poulie à câble (6), caractérisé en ce que l'engrenage planétaire (3) repose des deux côtés de la poulie à câble (6) sur la structure porteuse (1), et en ce que la partie de sortie (4) de l'engrenage planétaire (3) est conçue, directement ou indirectement, comme étant la partie freinée du dispositif de freinage.

2. Dispositif d'entraînement selon la revendication 1, caractérisé en ce que l'engrenage planétaire (3) repose sur un côté frontalement, et sur le côté opposé, au niveau de la partie de sortie (4), directement ou indirectement.

3. Dispositif d'entraînement selon la revendication 2, caractérisé en ce que la partie de sortie repose directement sur sa périphérie.

4. Dispositif d'entraînement selon la revendication 2, caractérisé en ce que la partie de sortie repose indirectement sur sa périphérie, par l'intermédiaire d'une partie bridée (12).

5. Dispositif d'entraînement selon la revendication 1, caractérisé en ce que l'engrenage planétaire (3) repose sur ses deux côtés frontaux.

6. Dispositif d'entraînement selon la revendication 1, caractérisé en ce que les deux appuis bilatéraux forment une unité.

7. Dispositif d'entraînement selon l'une des revendications 1 à 6, caractérisé en ce que la structure porteuse (1) est conçue sous forme de châssis, à l'intérieur duquel repose ou est logé l'engrenage planétaire (3) sur deux côtés opposés.

8. Dispositif d'entraînement selon la revendication 7, caractérisé en ce que la structure porteuse est conçue d'une seule pièce et pour l'essentiel en forme de U, les branches du U (10-11) formant les côtés opposés de la structure porteuse (1).

9. Dispositif d'entraînement selon l'une des revendications précédentes, caractérisé en ce que la structure porteuse est formée par au moins deux parties de logement (15-16) séparées de préférence dans le plan axial de l'engrenage, parties de logement qui renferment l'engrenage planétaire (3) au moins partiellement.

10. Unité d'entraînement selon la revendication 1, caractérisée en ce que l'engrenage planétaire (3) repose sur au moins un côté de la poulie à câbles (6), sur sa périphérie extérieure, sur la structure porteuse (1).

11. Unité d'entraînement selon l'une des revendications précédentes 1 à 10, caractérisée en ce que le moteur d'entraînement (2) est fixé sur le côté extérieur (11) de la structure porteuse (1).

12. Unité d'entraînement selon l'une des revendications précédentes 1 à 10, caractérisée en ce que la structure porteuse est conçue en tant que partie du châssis de logement du moteur, et en ce que le moteur est raccordé directement à l'engrenage planétaire.

13. Unité d'entraînement selon l'une des revendications précédentes, caractérisée en ce que la poulie à câble (6) est pour l'essentiel, disposée dans le plan symétrique entre les appuis dans la structure porteuse (1).

14. Dispositif d'entraînement selon l'une des revendications précédentes, caractérisé en ce que le dispositif de freinage est prévu sur l'enveloppe de logement (4) de l'engrenage planétaire (3), et/ou de la poulie à câble.

15. Dispositif d'entraînement selon la revendication 14, caractérisé en ce que le dispositif de freinage présente au moins un disque de freinage (25) prévu sur le côté extérieur de l'enveloppe de logement (4) et/ou de la poulie à câble.

16. Unité d'entraînement selon la revendication 14, caractérisée en ce que l'enveloppe de logement (4) présente une surface de freinage pour un frein à mâchoires et/ou pour un frein à bande ou à ruban.

17. Unité d'entraînement selon la revendication 16, caractérisée en ce que la poulie à câble (6) est munie d'une bride annulaire (18) s'étendant dans la direction périphérique, dans la périphérie extérieure de laquelle sont ménagées les gorges (8) pour recevoir les câbles (9), et en ce que le dispositif de freinage exerce une action radialement, d'une part, sur les côtés dirigés vers l'extérieur des câbles (9) et d'autre part, en opposition au côté intérieur de la bride (18).

18. Unité d'entraînement selon la revendication 14, caractérisée en ce que l'âme de la poulie à câble est conçue sous forme de surface de freinage pour un frein à disque.

19. Unité d'entraînement selon la revendication 14, caractérisée en ce qu'une partie, dirigée radialement de la poulie à câble (6), est conçue en tant que disque de frein.

20. Unité d'entraînement selon l'une des revendications précédentes, caractérisée en ce que la bride de la poulie à câble est conçue en tant que disque à frein ou poulie frein.
